# EUROPEAN PATENT APPLICATION

(11) **EP 0 617 523 A2**
(43) Date of publication of application: **28.09.1994**
(21) Application number: 94302146.9
(22) Date of filing: 24.03.1994
(51) Int. Cl.: H04B 7/26

(54) **Digital radio communication apparatus including transmission error control**

(30) Priority: 25.03.1993 JP 65847/93
(71) Applicant: KABUSHIKI KAISHA TOSHIBA, Kawasaki-shi, Kanagawa-ken 210 (JP)
(72) Inventor: Yoshioka, Yuka, c/o Intellectual Property Div., Tokyo (JP); Obayashi, Arata, c/o Intellectual Property Div., Tokyo (JP)
(74) Representative: BATCHELLOR, KIRK & CO.

(57) **Abstract**

A radio communication apparatus for use in a time division multiple access controls to prevent signals from being transmitted through a transmitter in response to recognition that the transmitter operates during a time other than a time slot assigned thereto. A controller may observe during a time other than the time slot assigned to the apparatus whether signals are outputted from the transmitter. Power to the transmitter may be disconnected in response to the recognition.

## Description

The present invention relates to the field of radio communication apparatus such as mobile telephones, portable telephones, cordless telephones, transceiver apparatuses, satellite communication apparatuses, and the like. More specifically, the present invention relates to a radio communication apparatus used in a radio communication system adopting a time division multiple access (TDMA) transmission method by which radio frequency signals are transmitted in a burst form during one or more time slots between a base station and the radio communication apparatus.

As the number of subscribers in cellular radio systems increase, the TDMA transmission method is being adopted into the cellular radio system so that signals are transmitted at a more efficient rate. In communication by means of the TDMA transmission method, signals are constituted of continuous frames. The length of each frame is predetermined. Further, each frame is constituted of a plurality of time slots. One of the time slots is assigned to a mobile unit. The mobile unit transmits signals to a base station over radio links during the assigned time slot.

To make TDMA transmission work well, each mobile unit should transmit signals only during a time slot assigned thereto. This operating requirement may, however, be violated if a circuit device of a mobile unit does not operate properly, for instance, due to a large accrued operating time or a strong impact given to the device. The transmission in non-assigned time slots due to such a malfunction causes communication interference with other mobile units which transmit signals in the time slots.

It is accordingly an object of the present invention to provide a radio communication apparatus which reduces interference with communication of other mobile units.

In accordance with one aspect of the present invention there is provided radio communication apparatus for use in a time division multiple access system wherein signals are transmitted between the apparatus and a base station over radio links during a time slot assigned to the apparatus, has a transmitter for transmitting signals to the base station over the radio links; and a controller, responsive to operation of the transmitter, for preventing signals from being transmitted by the transmitter in response to occurrence of an undesired transmission operation by which the transmitter transmits during a time other than the assigned time slot.

Further, in accordance with another aspect of the present invention, there is provided a method for operation of a radio communication apparatus for use in a time division multiple access system wherein signals are transmitted between the apparatus and a base station over radio links during a time slot assigned to the apparatus.

The method comprises steps of: transmitting signals to the base station over the radio links; and preventing signals from being transmitted in response to occurrence of an undesired transmission operation due to the transmission during a time other than the assigned time slot.

### BRIEF DESCRIPTION OF THE DRAWINGS

Figure 1 shows an example of an arrangement of a cellular radio system;
Figure 2 is a block diagram showing a digital radio telephone according to an embodiment of the present invention;
Figures 3a to 3c show an example of the structure of time slots in a TDMA transmission method;
Figures 4a to 4e constitute a timing chart for explaining proper transmission.
Figures 5a to 5e constitute a timing chart for explaining a first way of observing transmission errors;
Figures 6a to 6e constitute a timing chart for explaining a second way of observing transmission errors;
Figures 7a to 7e constitute a timing chart for explaining a third way of observing transmission errors;
Figures 8a to 8e constitute a timing chart for explaining a fourth way of observing transmission errors;
Figure 9 is a flowchart for explaining the operations of a digital radio telephone in the manner of observation shown in Figures 8a to 8e;
Figure 10 is a block diagram showing a digital radio telephone according to another embodiment of the present invention.

### DETAILED DESCRIPTION OF THE PREFERRED EMBODIMENTS

Preferred embodiments of the present invention will be described with reference to the accompanying drawings.

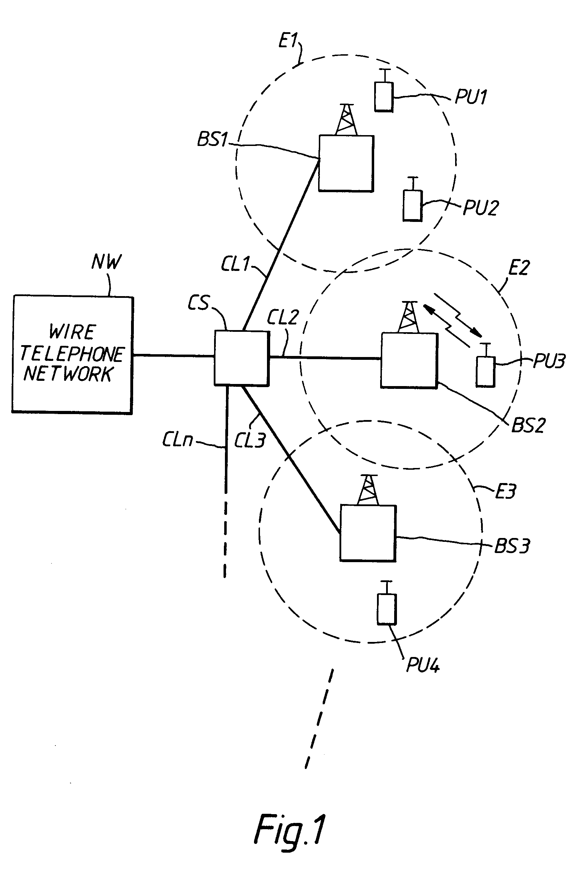

A cellular mobile radio communication system is described with reference to FIG.1. FIG.1 shows an example of a cellular radio system. The system, as shown in FIG.1, comprises a control station CS connected to a wire telephone network NW, a plurality of base stations BS1-BS3 which are respectively connected to the control station CS via the landlines CL1-CL3, and a plurality of mobile radio units PU1-PU4. Each of the base stations BS1-BS3 has its own radio zone E1-E3, respectively. The mobile radio units PU1-PU4 may be in communication with the base stations BS1-BS3 via radio links in the radio zones E1-E3.

The system may operate in the following manner. A control channel is first established for exchanging control signals between the base station and the mobile radio unit. A speech channel is then established between the base station and the mobile radio unit. For transmitting information, an encoder encodes speech signals and data. A modulator modulates carrier signals with the encoded digital speech signals and data. A transmitter then transmits the modulated carrier signals during a time slot assigned to the mobile radio unit. For receiving information, a receiver receives the modulated carrier signals, a demodulator demodulates the carrier signals into baseband signals, and then a decoder decodes the baseband signals to reproduce the speech signals. Further, there may be provided a channel-encoder/decoder for performing error correction and interleaving/deinterleaving for TDMA transmission.

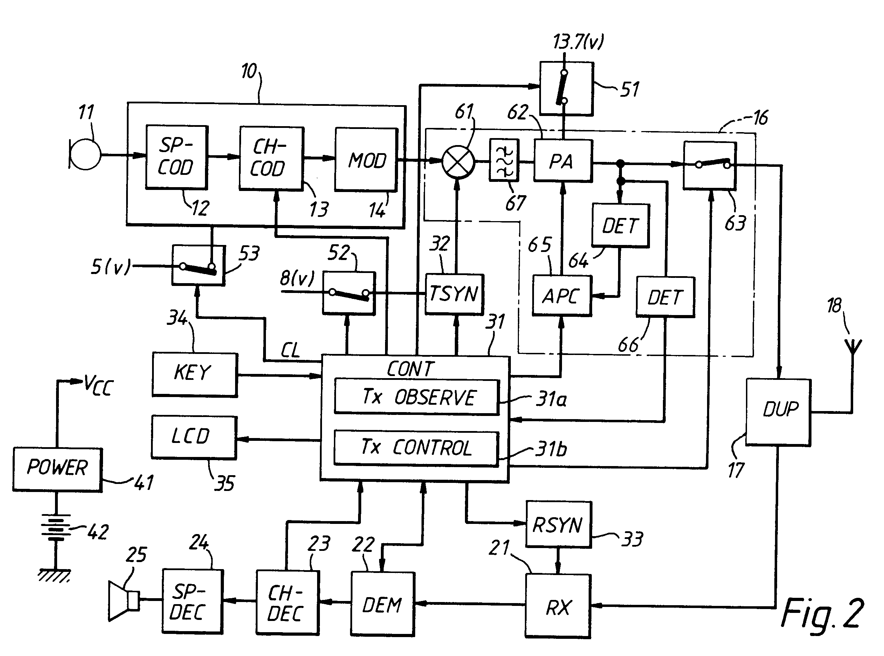

FIG.2 is a block diagram showing a digital radio telephone used in a digital cellular radio telephone system according to an embodiment of the present invention.

The digital radio telephone comprises a reception system, a transmission system, a control system and a power supply system.

The reception system comprises an antenna 18, and a duplexer 17 in communication with the antenna 18. A receiver 21 is coupled to the duplexer 17. A demodulator 22 is coupled to the receiver 21. A reception synthesizer 33 provides signals of prescribed frequencies to the receiver 21. A channel decoder 23 and a speech decoder 24 coupled to the channel decoder 23 are provided. The channel decoder 23 is also coupled to the demodulator 22. The speech decoder 24 is also coupled to a speaker 25.

The transmission system comprises the antenna 18, and the duplexer 17 in communication with the antenna 18. A transmitter 16 is coupled to the duplexer 17. A modulator 14 is coupled to the transmitter 16. A transmission synthesizer 32 provides signals of prescribed frequencies to the transmitter 16. A channel encoder 13 and a speech encoder 12 coupled to the channel encoder 13 are provided. The channel encoder 13 is also coupled to the modulator 14. The speech encoder 12 is also coupled to a microphone 11.

The speech encoder 12, the channel encoder 13, and the modulator 14 can be provided as an IC chip set 10. The chip set comprises, for example, four IC chips.

The transmitter 16 comprises a power amplifier 62 to power amplify signals to be transmitted to a base station through the duplexer 17 and the antenna 18. A mixer 61 is coupled to the modulator 14 and the transmission synthesizer 32. A bandpass filter 67 is provided between the mixer 61 and the power amplifier 62. The power amplifier 62 is also coupled to a switch 63, a level detector 64, and a transmission detector 66. The switch 63 is also coupled to the duplexer 17. An automatic power control (hereinafter referred to as APC) circuit 65 is provided between the power amplifier 62 and the level detector 64 and controls an amplifying magnitude of the power amplifier 62.

A control system comprises a controller 31, a keypad 34 having a hook switch and numeral keys, and a liquid crystal display (hereinafter referred to as LCD) 35. The controller 31 is coupled to the channel encoder 13, the channel decoder 23, the transmission synthesizer 32, the reception synthesizer 33, the demodulator 22, the transmitter 16, the keypad 34, and the LCD 35.

A power supply system comprises a battery 42 and a power source circuit 41 for supplying voltage Vcc from which are derived several voltages for application to different parts of the circuitry. Switches 51, 52 and 53 are provided between the power source circuit 41 and the power amplifier 62, the transmission synthesizer 32, and the chip set 10, respectively.

The controller 31 preferably comprises a microcomputer. In addition to controlling radio link establishment operations, the controller 31 controls switching operations of the switches 51, 52, 53 and 63. Further, the controller 31 provides reference voltages to the APC circuit 65 and frequency designation signals to the reception synthesizer 33 and the transmission synthesizer 32.

The operation of the digital radio telephone is described next.

While the digital radio telephone is in a stand-by mode, the telephone communicates with a base station over a control channel. Control channels are assigned frequencies for transmitting control information. When incoming signals are received over the control channel or call request signals are transmitted from the telephone over the control channel, the telephone receives, over the control channel, information such as a number of a time slot assigned thereto and which speech channel is assigned thereto. Speech channels are assigned frequencies in which speech signals are transmitted between the base station and the radio telephone.

The information received by the receiver 21 is provided to the controller 31 through the demodulator 22. Based on the received information, the controller 31 controls the reception synthesizer 33 to supply desired frequency signals so that the receiver 21 is ready to receive signals over the speech channel. At the same time, the controller 31 provides an assigned time slot number to the demodulator 22. The demodulator 22 prepares a predetermined pattern of synchronization data for the time slot number. The pattern depends on the time slot number. While receiving signals over the speech channel, signals having the same pattern as the prepared one are captured in the demodulator 22. Accordingly, synchronization is established. The demodulator 22 provides synchronization information to the controller 31, so that the controller 31 can determine whether it is the time slot assigned to the telephone.

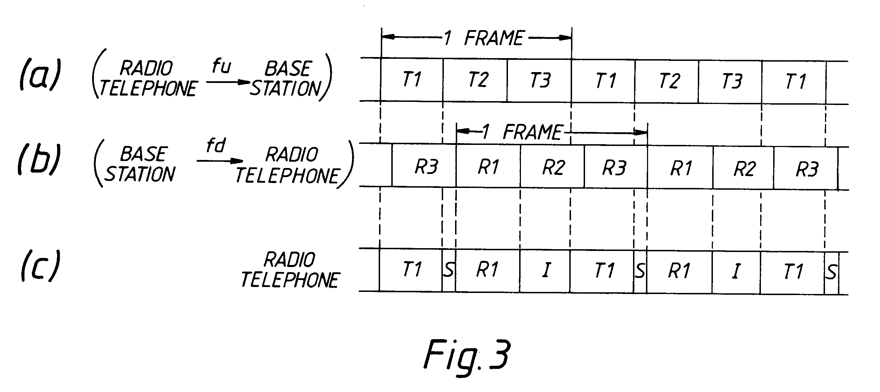

Generally, signals transmitted in a TDMA transmission method are as shown in FIGs.3(a)-3(c) which show an example of constitutions of time slots in a TDMA transmission method. As shown in FIGs.3(a)-3(c), different frequencies are assigned to transmission and reception for one speech channel. A frequency fu for transmission from the radio telephone to the base station comprises a repetition of transmission time slots T1 - T3 (FIG.3(a)). The transmission time slots T1 - T3 constitute a frame. On the other hand, a frequency fd for reception by the radio telephone of signals transmitted from the base station comprises a repetition of reception time slots R1 - R3 (FIG.3(b)). The reception time slots R1 - R3 constitute a frame. In the case that a time slot number 1 is assigned to the radio telephone, it transmits signals during a transmission time slot T1 and receives signals during a reception time slot R1 (FIG.3(c)). In FIG.3(c), the character S indicates a standard offset. The character I indicates an idle slot.

In the following description, receiving operations are made in a reception time slot R1 assigned to the telephone. Transmitting operations are made in a transmission time slot T1 assigned to the telephone.

When the receiver 21 receives via the antenna 18 and the duplexer 17 radio frequency signals transmitted from the base station, the receiver 21 mixes received signals with signals supplied from the reception synthesizer 33 and outputs signals of an intermediate frequency to the demodulator 22. The demodulator 22 demodulates the intermediate frequency signals into baseband signals. The channel decoder 23 deinterleaves the baseband signals and performs error correction operations on the deinterleaved signals. Error corrected speech signals from the channel decoder 23 are applied to the speech decoder 24 and decoded into analog speech signals. Error corrected data signals from the channel decoder 23 are applied to the controller 31. The analog speech signals are outputted via the speaker 25.

When voice signals are inputted into the microphone 11, the microphone 11 outputs speech signals to the speech encoder 12. The speech signals are converted into digital signals and encoded in the speech encoder 12. The encoded signals are applied to the channel encoder 13. In the channel encoder 13, an error correcting code is added to the encoded signals and the resulting signals are interleaved. The interleaved signals are applied to the modulator 14 and modulated therein. The transmitter 16 mixes the modulated signals with signals supplied from the transmission synthyesizer 32 in order to produce radio frequency signals. The transmitter 16 also power amplifies the radio frequency signals and transmits the power amplified radio frequency signals via the duplexer 17 and the antenna 18.

The operation of the transmitter 16 is described in detail next. The modulated signals outputted from the modulator 14 are applied to the mixer 61. The mixer 61 mixes the modulated signals with signals supplied from the transmission synthyesizer 32 and outputs radio frequency signals. The bandpass filter 67 filters the radio frequency signals in order to cut off undesired elements included in the radio frequency signals. In the power amplifier 62, the filterd signals are power amplified to a certain level designated by the base station. The power amplified signals are transmitted to the base station via the switch 63, the duplexer 17, and the antenna 18. Automatic power control operations are as follows. The power amplified signals are also applied to the level detector 64. The level detector 64 detects a power level of the power amplified signals and outputs the detected level to the APC circuit 65. In the APC circuit 65, the detected level is compared with a reference level supplied from the controller 31. The reference level varies from a level 0 to a level 7, for example. The reference level depends on a designated level transmitted from the base station. The resulting signals of the comparison are applied to the power amplifier 62 from the APC circuit 65. On the basis of the resulting signals, the power amplifier 62 adjusts its amplification magnitude. Further, the power amplified signals outputted from the power amplifier 62 are also applied to the transmission detector 66. The transmission detector 66 comprises a comparator. The comparator compares the level of the power amplified signals with a predetermined threshold level. The threshold level may be determined to be a value between 0 and the lowest transmission level, the level 7. When the level of the power amplified signals is equal to or exceeds the threshold level, the transmission detector 66 outputs logical high level signals to the controller 31. On the other hand, when the level of the power amplified signals is less than the threshold level, the transmission detector 66 outputs logical low level signals to the controller 31.

The power source circuit 41 supplies Vcc from which are derived 5V applied to the chip set 10, 8V applied to the transmission synthesizer 32, and 13.7V applied to the power amplifier 62 through the switches 53, 52, and 51, respectively.

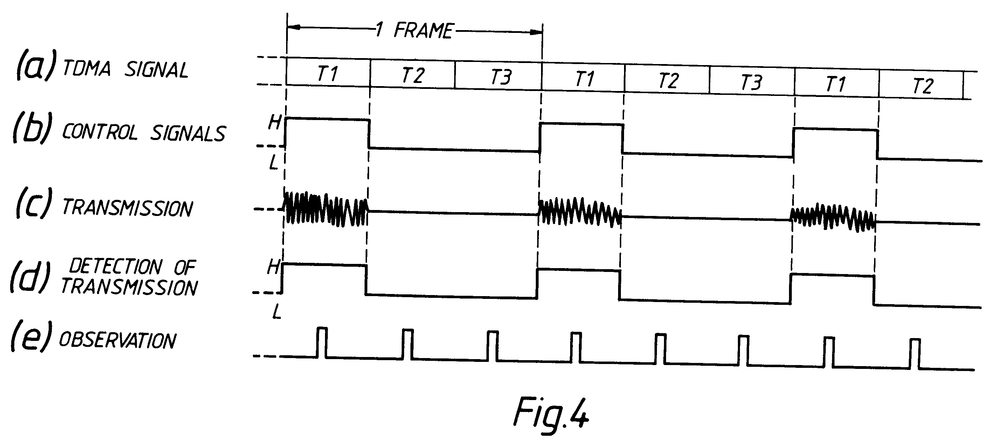

FIGs.4(a)-4(e) constitute a timing chart for explaining transmission.

As already shown in FIG.3(a), TDMA signals of a frequency fu transmitted from the radio telephone to the base station are constituted of continuous frames. Each frame is constituted of time slots T1 to T3. The length of each frame may be 20msec.(FIG.4(a)).

Here the time slot T1 is assigned to the radio telephone for its transmission. The other time slots T2 and T3 may be assigned to two other radio telephones for their transmissions, respectively. As described in the explanation of FIG.2, the controller 31 recognizes whether it is the time slot assigned to the telephone. Also by means of calculating or counting the number of clocks applied thereto, the controller 31 recognizes the other time slots.

Accordingly, when it is the time of the time slot T1, the controller 31 provides logical high level control signals to the switches 51, 52, 53, and 63 so that the switches 51, 52, 53, and 63 close (FIG.4(b)).

That is, desired voltages are supplied to the power amplifier 62, the transmission synthesizer 32, and the chip set 10. As a result, the transmitting operations are performed (FIG.4(c)).

During the transmission, the transmission detector 66 detects the transmitting state and provides logical high level signals to the controller 31 (FIG.4(d)).

In the controller 31, a transmission observing means 31a is provided. The transmission observing means 31a observes whether the logical high level signals from the detector 66 are applied to the controller 31. The observation is operated once during each time slot. The time of each observing operation is, for example, 100µsec.

If the logical high level signals are applied during the time slot T1, the transmission observing means 31a determines that the transmission is properly operated (FIG.4(e)).

When the time slot T1 is over, the controller 31 provides logical low level control signals to the switches 51, 52, 53, and 63 so that the switches 51, 52, 53, and 63 open (FIG.4(b)).

That is, desired voltages are not supplied to the power amplifier 62, the transmission synthesizer 32, and the chip set 10. As a result, the transmitting operations are ceased (FIG.4(c)).

Therefore, the transmission detector 66 supplies logical low level signals to the controller 31 during time slots T2 and T3 (FIG.4(d)).

Since logical high level signals are not provided by the detector 66 during the time slots T2 and T3, the transmission observing means 31a determines that the transmission is properly operated (FIG.4(e)).

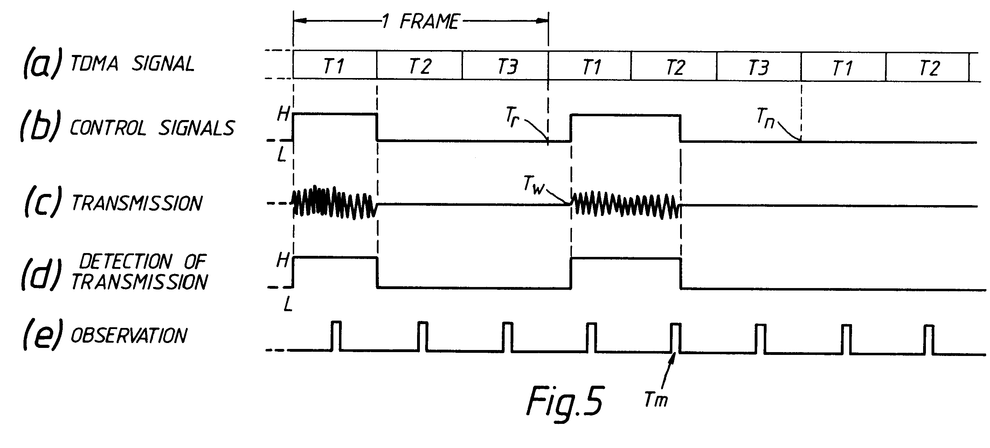

FIGs.5(a)-5(e) constitute a timing chart for explaining a first technique of observing transmission errors. For a certain reason, such as a malfunction due to a component failure, the controller 31 may not provide logical high level control signals to the switches 51, 52, 53, and 63 at the right time Tr (FIG.5(b)). In this case, responsive to the delayed logical high level control signals, the transmitting operations may start at the wrong time Tw (FIG.5(c)).

Reasons for such a malfunction of the controller 31 may include a large accrued operating time of circuit devices, a strong impact given to the circuit devices, damage to circuit connections caused by temperature changes, or software bugs.

The transmission detector 66 detects that the level of the power amplified signals outputted from the power amplifier 62 exceeds the predetermined level. As a result, the transmission detector 66 outputs logical high level signals from the time Tw to the time Te (FIG.5(d)).

In the controller 31, the transmission observing means 31a observes once during each of the time slots T1, T2, and T3 whether there is an application of logical high level signals. The observation by the transmission observing means 31a may be made in the middle of each of the time slots T1, T2, and T3. At the time Tm which is in the middle of the time slot T2, the transmission observing means 31a recognizes that there is an application of the logical high level signals during the time slot T2 (FIG.5(e)).

Responsive to the recognition by the transmission observing means 31a at the time Tm, a transmission control means 31b operates to prevent transmitting operations from this time on. Logical low level control signals from the controller 31 are provided to the switches 51, 52, 53, and 63 so as to open the switches 51, 52, 53, and 63. Further, at the time Tn and even later, logical high level control signals are not outputted from the controller 31. In addition, even after the prevention of the transmitting operations, the transmission observing means 31a continues the observing operation (FIG.5(b)).

When transmitting operations are prevented, the controller 31 provides message signals to the LCD 35. The LCD 35 displays a message to inform a user of 'transmission errors' and 'not further usable'.

In the above embodiment, as an alternate to opening all of the switches 51, 52, 53, and 63, the controller 31 may, instead, provide logical low level control signals to any one of the switches 51, 52, 53, and 63 in response to the end of the time slot T1.

If the switch 51 opens, the voltage 13.7V is not supplied to the power amplifier 62. Therefore, the power amplifier 62 does not operate at all.

If the switch 52 opens, the voltage 8V is not supplied to the transmission synthesizer 32. As the transmission synthesizer 32 does not operate, a frequency of signals outputted from the mixer 61 is not desirable. As a result, the undesired frequency signals are filtered by the bandpass filter 67, with the result that very low level signals are applied to the power amplifier 62. Such very low level signals, when power amplified and transmitted, do not interfere with the operation of other radio telephones.

If the switch 53 opens, the voltage 5V is not supplied to the chip set 10. Since the speech encoder 12, the channel encoder 13, and the modulator 14 do not operate, a frequency of signals outputted from the mixer 61 is not desirable. As a result, the undesired frequency signals are filtered by the bandpass filter 67, with the result that very low level signals are applied to the power amplifier 62. Such very low level signals, when power amplified and transmitted, do not interfere with the operation of other radio telephones.

If the switch 63 opens, the power amplified signals outputted from the power amplifier 62 are not applied to the duplexer 17. Therefore, the power amplified signals are not transmitted to the base station.

In the above embodiment, the transmission observing means 31a observes once during each of the time slots T1, T2, and T3 whether there is an application of logical high level signals. In this or other cases, the transmission observing means 31a may observe in an interval equal to or less than the length of one time slot whether there is an application of logical high level signals.

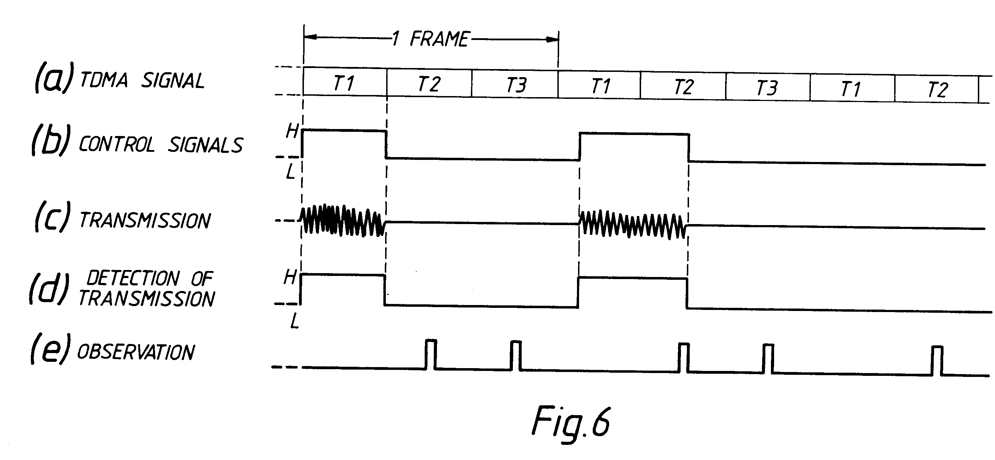

FIGs.6(a)-6(e) constitute a timing chart for explaining a second technique of observing transmission errors. As shown in FIGs.6(a)-6(e), the only difference from FIGs.5(a)-5(e) is how to observe signals from the transmission detector 66 (FIG.6(e)). The transmission observing means 31a observes only during the time slots T2 and T3 whether there is an application of logical high level signals (FIG.6(e)). It is not necessary to observe during the time slot T1 in order to find transmission errors which interfere with other telephone's transmission during the time slots T2 and / or T3. The balance of operations is similar to those of FIGs.5(a)-5(e).

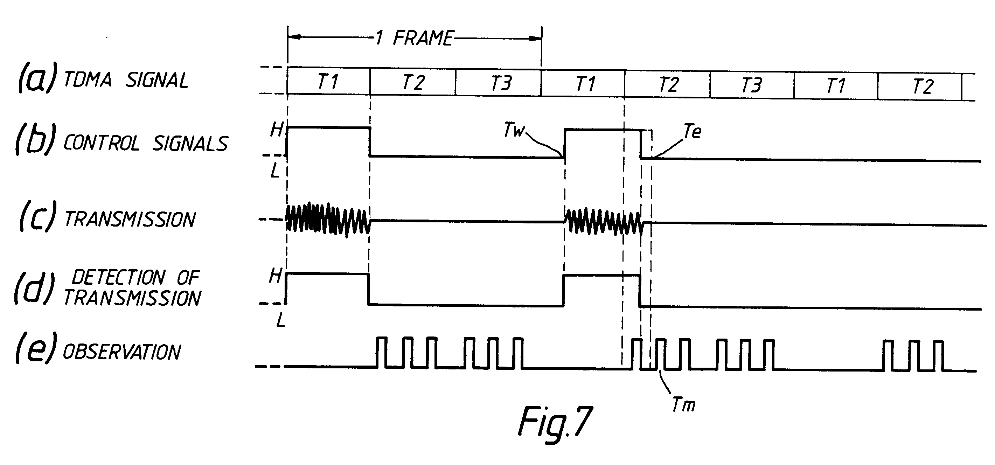

FIGs.7(a)-7(e) constitute a timing chart for explaining a third technique of observing transmission errors. As shown in FIGs.7(a)-7(e), the transmission observing means 31a observes a plurality of times during each time slot whether there is an application of logical high level signals (FIG.7(e)). By observing in this manner, the transmission error may be recognized at an earlier time than resulting from the observing technique shown in FIGs.6(a)-6(e). Further, according to the observing technique shown in FIGs.6(a)-6(e) the transmission error may not be recognized if the observing operation is made only at the time Tm. In particular, it is when the delayed logical high level control signals are provided at the wrong time Tw earlier than the middle of the time slot T1, and the transmission controller 31b maintains to provide the logical high level control signals until the time Te, that is, for a right period for one time slot. However, by the observing technique shown in FIG.7(e), the transmission observing means 31a cannot miss the transmission error.

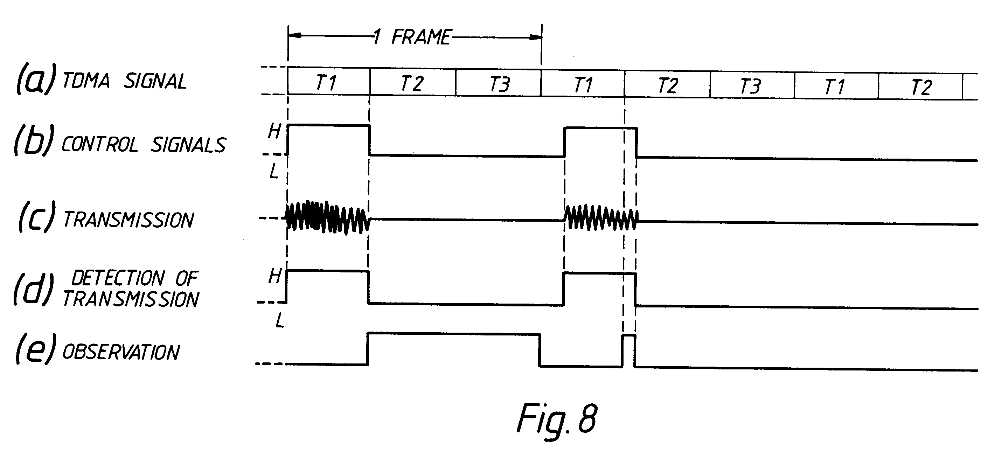

FIGs.8(a)-8(e) constitute a timing chart for explaining a fourth technique of observing transmission errors. As shown in FIGs.8(a)-8(e), the transmission observing means 31a observes continuously during the time slots T2 and T3 whether there is an application of logical high level signals (FIG.8(e)). By observing in this way, the transmission error may be recognized at an earlier time than resulting from the observing technique shown in FIGs.7(a)-7(e). In addition, responsive to prevention of the transmitting operations, the transmission observing means 31a ceases the observing operation for subsequent time slots.

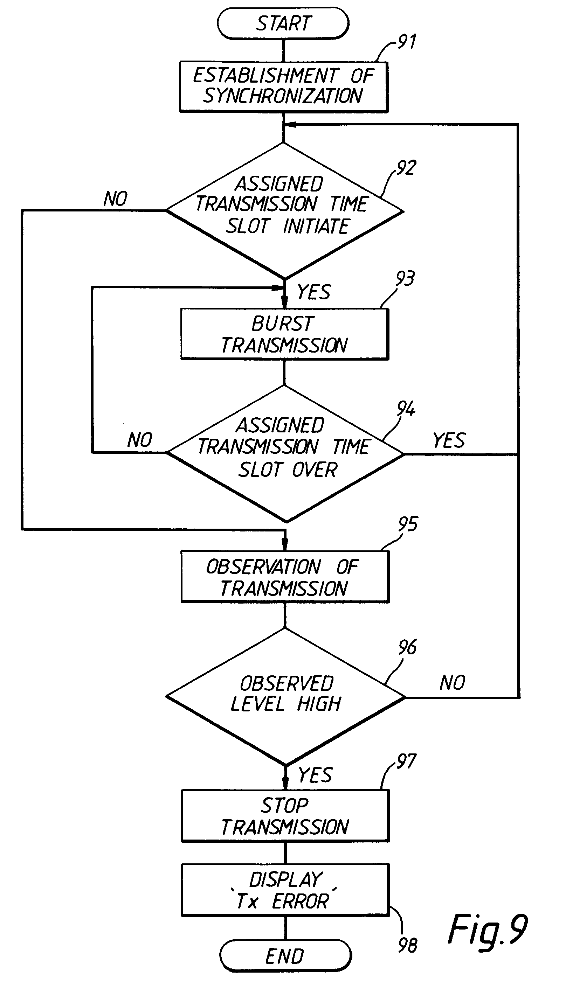

The operations of one of the observing technique of the above described embodiment of the present invention is described with reference to a flowchart shown in FIG.9. FIG.9 is a flowchart for explaining the operations of the telephone in accordance with the observing technique shown in FIGs.8(a)-8(e).

First of all, synchronization such as a frame synchronization and a bit synchronization is established in the demodulator 22 (step 91).

The synchronization information is provided to the controller 31, and the controller 31 determines whether it is the time of the assigned time slot for transmission (step 92).

When the controller 31 determines that the assigned time slot has commenced, the controller 31 controls the switches 51, 52, 53, and 63 to close. Accordingly, power amplified signals outputted from the power amplifier 62 are transmitted to the base station in a burst form through the duplexer 17 and the antenna 18 (step 93).

Responsive to an initiation of the transmission, the controller 31 measures time. The controller 31 determines whether a predetermined period of the assigned transmission time slot is over, or a predetermined time has passed (step 94).

When the controller 31 determines that the predetermined period is over or the predetermined time has passed, operations return to the step 92.

When the controller 31 determines in the step 92 that it is not the time of the assigned time slot for transmission, the transmission observing means 31a observes whether there is an application of logical high level signals from the transmission detector 66 (step 95).

As a result of the observing operation in the step 95, the transmission observing means 31a determines whether there is an application of logical high level signals from the transmission detector 66 (step 96).

When the transmission observing means 31a determines that there is no application of logical high level signals from the transmission detector 66, operations return to the step 92. If the transmitting operation is normal, the transmission detector 66 will not provide logical high level signals even noise signals are applied to the transmission detector 66 during the time slots T2 and T3.

When it is determined in the step 96 that there is an application of logical high level signals from the transmission detector 66, which means that the transmission controller 31b recognizes the transmission error, the transmission control means 31b controls the switches 51, 52, 53, and 63 to open. Consequently, the transmission is stopped immediately after recognizing the transmission error (step 97).

Almost at the same time as the prevention of the transmission, the LCD 35 receives from the controller 31 information signals indicating the transmission error. The LCD 35 informs the user of the transmission error so that the user realizes that the telephone is in an unusable condition (step 98). It may be conceivable that the LCD 35 displays an error message or an error number. Furthermore, in order to inform the user of the transmission error, the telephone may generate audible signals such as a beep tone.

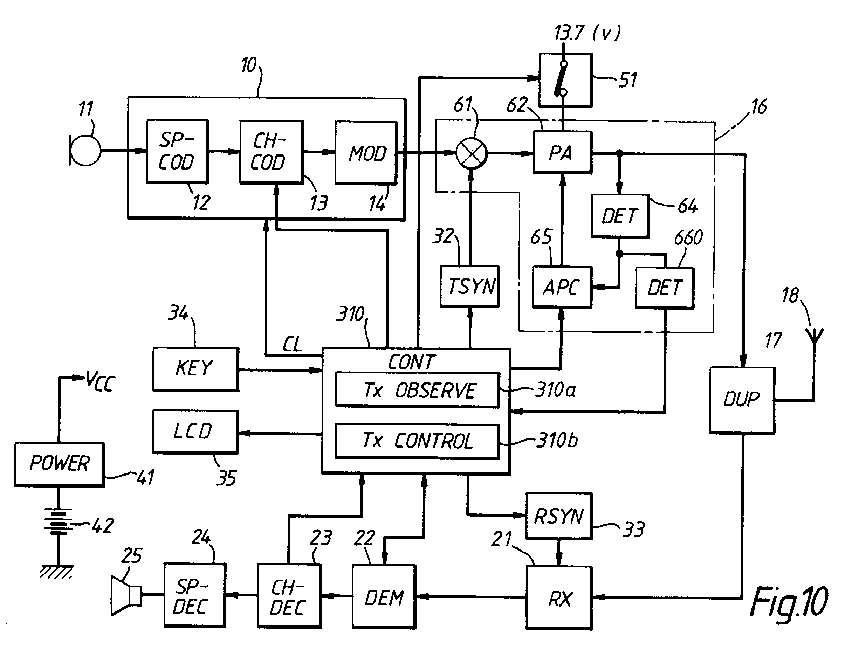

FIG.10 is a block diagram showing a digital radio telephone according to another embodiment of the present invention.

The digital radio telephone shown in FIG.10, as compared to the telephone shown in FIG.2, comprises a controller 310 instead of the controller 31 and a transmission detector 660 instead of the transmission detector 66. Also, the switches 52, 53, and 63 are not provided. In FIG.10, power supply connections to the chip set 10 and the transmission synthesizer 32 are therefore unswitched, but not shown. The other components may operate in a manner similar to the telephone shown in FIG.2.

The operation of the telephone is described as follows. The level detector 64 detects the level of power amplified signals outputted from the power amplifier 62 to supply the level to the APC circuit 65. The level outputted from the level detector 64 is also applied to the transmission detector 660. In the transmission detector 660, it is determined whether the level exceeds the predetermined threshold level. When the level is equal to or exceeds the predetermined threshold level, the transmission detector 660 supplies logical high level signals to the controller 310. In the controller 310, a transmission observing means 310a operates in the same manner as the transmission observing means 31a shown in FIG.2. Responsive to the recognition by the transmission observing means 310a that there is an application of logical high level signals from the transmission detector 660 during time slots other than the assigned time slot, a transmission control means 310b supplies logical low level control signals so as to open the switch 51. The transmission control means 310b also ceases to supply clock signals to the chip set 10 so as to disable the chip set 10. Although the transmission control means 310b has supplied control signals to open the switch 51 and has ceased to supply clock signals to the chip set 10 in the above embodiment, it may be applied to the present invention to perform either one of those two functions to stop transmission.

While embodiments of the present invention have been illustrated and described with respect to FIG.2 and FIG.10, the present invention is not so limited. In the case of any circuit formed from devices which prevent the transmitting operation when they do not operate and where such devices require clock signals in order to operate, for example, CMOS (Complementary Metal Oxide Semiconductor) devices, then transmission may be controlled by clock signals supplied to such devices. Therefore, for example, each of the modulator 14, the channel encoder 13, and the speech encoder 12 may be controlled by clock signals if each of them operates independently, and is formed from a clock signal dependent device, for example, a CMOS device. Further, in this case, the controller 310b may control each circuit independently so as to cease power supply to one or more of the circuits.

In addition, the transmission detector 66 may comprise an analog-to-digital converter which outputs to the controller 31 digital data signals showing the level of the power amplified signals. In this case, the controller 31 may compare the level shown in the digital data signals with the threshold level. When the level shown in the digital data signals is greater than the threshold level, for example, the transmission observing means 31a may supply logical low level control signals to the switches 51, 52, 53, and 63.

Further, signals to be prevented from being transmitted according to the present invention may not be limited to the speech signals supplied from the microphone, but may include signals such as data signals transmitted in a data communication system and speech synthesized signals supplied from a speech synthesis apparatus.

Still further, although the present invention applied to a digital radio telephone of a cellular radio telephone system has been described above, the present invention may be applied to any other kind of radio communication apparatus which transmits signals in a TDMA transmission method, including but not limited to a digital, dual mode or multiple mode radio telephone, a U.S. digital cellular radio telephone, a Japanese digital cellular radio telephone, a digital radio telephone for GSM, an automobile telephone, a portable telephone, a cordless telephone, and a satellite communication apparatus.

In summary, there has been described a radio communication apparatus according to the present invention, comprising a transmitter for transmitting signals to a base station over radio links and a controller for controlling to prevent signals from being transmitted through the transmitter in response to recognition that the transmitter operates during a time other than a time slot assigned to the apparatus.

A detector for detecting operations of the transmitter may be provided. In such a case, the controller may recognize on the basis of detection of the detector that the transmitter operates. Further, the detector may detect the level of signals to be transmitted from the transmitter. The controller may recognize on the basis of the level detected by the detector that the transmitter operates. The controller may recognize that the transmitter operates when the level detected by the detector exceeds a predetermined level. The predetermined level may be lower than a lowest transmission level allowed in the radio communication system.

The controller may observe whether the transmitter operates. In such a case, the observation may be made once during a time slot other than the time slot assigned to the apparatus. In addition, the observation may be made a plurality of times during a time slot other than the time slot assigned to the apparatus. Further, the observation may be made continuously during a time slot other than the time slot assigned to the apparatus. Still further, the observation may be made in an interval less than the length of one time slot during a time other than the time slot assigned to the apparatus. Still further, the controller may cease observing operations in response to the recognition. Yet still furthermore, the controller may continue observing operations even after the recognition.

A power supplier for supplying power to components of the apparatus may be provided. In such a case, when the transmitter may include an amplifier for amplifying signals to be transmitted to the base station over the radio links, the controller may control to prevent power supply by the power supplier to the amplifier in response to the recognition. In addition, when a frequency supplier for supplying a certain frequency signals to be mixed with signals to be transmitted to the base station over the radio links may be provided, the controller may control to prevent power supply by the power supplier to the frequency supplier in response to the recognition. Further, when a signal processor for processing signals to be applied to the transmitter may be provided, the controller may control to prevent power supply by the power supplier to the signal processor in response to the recognition. When the signal processor may comprise a CMOS device, clock signals may not be supplied to the CMOS device in response to the recognition.

A microphone for inputting information to be transmitted, an antenna, and a switch for disconnecting a path between the microphone and the antenna may be provided. In such a case, the controller may control the switch to disconnect a path between the microphone and the antenna in response to the recognition.

A display for informing of transmission disorder in response to the recognition may be provided.

Other variations, such as arrangement of and placement of circuit componemts, frame constitutions of TDMA signals, the way of recognizing transmission errors, the way of controlling transmission prevention, and algorithm of the controlling, may be made within the scope of the present invention.

## Claims

1. A radio communication apparatus for use in a time division multiple access system wherein transmitting means (16) transmits signals to a base station (BS1) over radio links during a time slot assigned to the apparatus, characterised by controlling means (31), responsive to operation of the transmitting means (16), for preventing signals from being transmitted by the transmitting means (16) in response to occurrence of an undesired transmission operation by which the transmitting means (16) transmits during a time other than the assigned time slot.

2. The apparatus claimed in claim 1 characterised in that the transmitting means (16) comprises amplifying means (62) for amplifying signals to be transmitted to the base station (BS1) over the radio links.

3. The apparatus claimed in claim 1 characterised in that the apparatus further comprises detecting means (66) for detecting operation of the transmitting means (16) and for providing detection signals representative of the detected operation and the controlling means (31) is coupled to receive the detection signals.

4. The apparatus claimed in claim 3 characterised in that the detecting means (66) includes means for detecting the level of signals to be transmitted from the transmitting means (16) and the detection signals represent a level of the signals to be transmitted.

5. The apparatus claimed in claim 4 characterised in that the controlling means (31) determines that the transmitting means (16) is transmitting when the detection signals exceed a predetermined level.

6. The apparatus claimed in claim 5 characterised in that the predetermined level is lower than a lowest transmission level allowed in the system.

7. The apparatus claimed in claim 1 characterised in that the controlling means (31) includes means (31a) for observing whether the transmitting means (16) is transmitting.

8. The apparatus claimed in claim 7 characterised in that the observing means (31a) observes once during a time slot other than the assigned time slot whether the transmitting means (16) is transmitting.

9. The apparatus claimed in claim 7 characterised in that the observing means (31a) observes at a plurality of times during a time slot other than the assigned time slot whether the transmitting means (16) is transmitting.

10. The apparatus claimed in claim 7 characterised in that the observing means (31a) observes continuously during a time slot other than the assigned time slot whether the transmitting means (16) is transmitting.

11. The apparatus claimed in claim 7 characterised in that successive observations of the observing means (31a) occur at an interval less than or equal to the length of one time slot during a time other than the asigned time slot.

12. The apparatus claimed in claim 7 characterised in that the observing means (31a) ceases observing in response to the occurrence of the undesired operation.

13. The apparatus claimed in claim 7 characterised in that the observing means (31a) continues observing after the occurrence of the undesired operation.

14. The apparatus claimed in claim 1 wherein the transmitting means (16) comprises amplifying means (62) for amplifying signals to be transmitted to the base station (BS1) over the radio links and the apparatus further comprises power supplying means (41) for supplying power to the amplifying means (62), characterised in that the controlling means (31) includes means (31b) for disconnecting the power supplying means (41) from the amplifying means (62) in response to the occurrence of the undesired operation.

15. The apparatus claimed in claim 1 further comprising frequency supplying means (32) for supplying predetermined frequency signals to be mixed with signals to be transmitted to the base station (BS1) over the radio links and power supplying means (41) for supplying power to the frequency supplying means (32), characterised in that the controlling means (31) includes means (31b) for disconnecting the power supplying means (41) from the frequency supplying means (32) in response to the occurrence of the undesired operation.

16. The apparatus claimed in claim 1 further comprising signal processing means (10) for processing signals to be applied to the transmitting means (16) and power supplying means (41) for supplying power to the signal processing means (10), characterised in that the controlling means (31) includes means (31b) for disconnecting the power supplying means (41) from the signal processing means (10) in response to the occurrence of the undesired operation.

17. The apparatus claimed in claim 16 characterised in that the signal processing means (10) comprises a device requiring receipt of clock signals for operation.

18. The apparatus claimed in claim 17 wherein the controlling means includes means for generating clock signals for application to the device, characterised in that the controlling means (31) is responsive to the occurrence of the undesired operation to cease the application of the clock signals.

19. The apparatus claimed in claim 1 further comprising inputting means (11) for inputting information to be transmitted, an antenna (18), and disconnecting means (63) for disconnecting a path between the inputting means (11) and the antenna (18), characterised in that the controlling means (31) controls the disconnecting means (63) to disconnect the path between the inputting means (11) and the antenna (18) in response to the occurrence of the undesired operation.

20. The apparatus claimed in claim 1 characterised in that the apparatus further comprises informing means (35) for informing a user of transmission disorder in response to the occurrence of the undesired operation.

21. A radio communication apparatus for use in a time division multiple access system wherein transmitting means (16) transmits signals to a base station (BS1) over radio links during a time slot assigned to the apparatus; detecting means (66) detects transmission by the transmitting means (16); and recognizing means (31a) recognizes occurrence of the assigned time slot; and controlling means (31b), responsive to the detecting means (66), for preventing the transmitting means (16) from transmitting upon detection of transmission while the recognizing means (31a) does not recognize the occurrence of the assigned time slot.

22. A radio communication apparatus for use in a time division multiple access system wherein transmitting means (16) transmits signals to a base station (BS1) over radio links during a time slot assigned to the apparatus; power supplying means (41) supplies power to components of the transmitting means (16), characterised in that controlling means (31) recognizes transmission by the transmitting means (16) during a time other than the assigned time slot and disconnects the power supplying means (41) from the transmitting means (16) components upon recognizing transmission by the transmitting means (16) during a time other than the assigned time slot.

23. In a radio communication apparatus for use in a time division multiple access system wherein signals are transmitted between the apparatus and a base station (BS1) over radio links during a time slot assigned to the apparatus, a method of operation characterised in preventing signals from being transmitted in response to occurrence of an undesired transmission operation due to the transmission during a time other than the assigned time slot.

24. The method of operation claimed in claim 23 characterised in that the step of preventing includes a step of observing once during a time slot other than the assigned time slot whether the transmitting is being performed.

25. The method of operation claimed in claim 23 characterised in that the step of preventing includes a step of observing at a plurality of times during a time slot other than the assigned time slot whether the transmitting is being performed.

26. The method of operation claimed in claim 23 characterised in that the step of preventing includes a step of observing continuously during a time slot other than the assigned time slot whether the transmitting is being performed.

27. The method of operation claimed in claim 23 characterised in that the step of preventing includes a step of successively observing at an interval less than or equal to the length of one time slot during a time other than the asigned time slot.
